# EUROPÄISCHE PATENTSCHRIFT

(11) **EP 1 417 275 B1**
(45) Veröffentlichungstag und Bekanntmachung des Hinweises auf die Patenterteilung: **12.04.2006**
(21) Anmeldenummer: 02764585.2
(22) Anmeldetag: 12.06.2002
(51) Int. Cl.: C09J 7/02, C08J 5/18, C08J 7/04

(54) **BIAXIAL VERSTRECKTE KLEBEBÄNDER UND VERFAHREN ZU DEREN HERSTELLUNG**
BIAXIALLY DRAWN ADHESIVE TAPES AND METHOD FOR PRODUCING THE SAME
BANDES ADHESIVES A ETIRAGE BIAXIAL ET PROCEDE DE FABRICATION DESDITES BANDES

(30) Priorität: 09.07.2001 DE 10132534
(43) Veröffentlichungstag der Anmeldung: 12.05.2004
(73) Patentinhaber: tesa AG, 20253 Hamburg (DE)
(72) Erfinder: MÜSSIG, Bernhard, 21218 Seevetal (DE)
(86) Internationale Anmeldenummer: PCT/EP2002/006428
(87) Internationale Veröffentlichungsnummer: WO 2003/006567

(56) Entgegenhaltungen:
- EP-A- 1 078 966
- WO-A-92/17555

## Beschreibung

Die Erfindung betrifft ein Verfahren zur Herstellung eines Folienklebebandes sowie ein entsprechend hergestelltes Klebeband.

Üblicherweise werden für Folienklebebänder biaxial verstreckte Folien aus dem Zwei-Stufen-Prozeß eingesetzt. Aus Kostengründen haben isotaktisches Polypropylen und daneben dessen Copolymere mit Ethylen die mit Abstand größte Bedeutung. Von geringerer Bedeutung für Klebebänder ist Polyester; Polyamid hat nur geringe praktische Anwendung gefunden.
Die Verstreckung hat eine wesentliche Funktion, dadurch sind die Klebebänder besser in der Festigkeit, der Transparenz und der Verarbeitbarkeit bel ihrer Herstellung als auch bei der Applikation durch den Endverbraucher. Die marktüblichen Produkte weisen aufgrund des Herstellverfahrens jedoch die guten mechanischen Eigenschaft in Querrichtung (CD; rechtwinklig zur Laufrichtung) statt in der technisch relevanten Längsrichtung (MD, parallel zur Laufrichtung) auf. Solche Folien werden in einem separaten Arbeitsgang mit dem Haftklebstoff beschichtet, dabei werden meistens noch weitere Funktionsschlchten zusätzlich aufgebracht Die wichtigste Anwendung ist Kartonverschlußklebeband (CST), daneben gibt es Produkte wie Büro- und Haushaltsklebebänder oder Spezialprodukte zum Verpacken, Kennzeichen usw.

Zum Stand der Technik zur Herstellung von Klebebändern aus biaxial verstreckten Folienträgern gehören die im folgenden dargelegten Verfahrensschritte:
- Herstellung einer BOPP-Folie.
   Praktisch ausnahmslos kommen Folien aus dem Zwei-Stufen-Prozeß (Reckung zuerst längs und dann quer) zum Einsatz, obwohl die Festigkeit in Längsrichtung höher ist als in Quererrichtung Anlagen für einen derartigen Prozeß werden z.B. von den Firmen Brückner (D) oder Mitsubishi (J) hergestellt. Diese Anlagen erlauben die Extrusion einer Polypropylenschmelze auf eine gekühlte Walze (Chill-Roll), eine Verstreckung in MD im Verhältnis von ca. 1 : 5 und eine Verstreckung in CD im Verhältnis von ca. 1 : 10. Die Folie wird vom Klebebandhersteller selbst gefertigt oder von einem Folienhersteller bezogen. Der Zwei-Stufen-Prozeß ist auch in umgekehrter Reihenfolge möglich, wobei bessere mechanische Eigenschaften in MD erreicht werden, jedoch ist der Prozeß weder wirtschaftlich noch in großer Breite betriebssicher, da die Verstreckung in MD in voller Breite durchgeführt werden muss; diese Variante wird daher praktisch nicht genutzt. Eine Drei-Stufen-Verstreckung (Verstreckung in MD-CD-MD) liefert ebenfalls eine verbesserte Festigkeit in MD gegenüber dem üblichen Zwei-Stufen-Verfahren, ist aber verfahrenstechnisch aufwendig und hat daher z. Zt. nur geringe Bedeutung. Geblasene Folien aus Ringdüsen sind trotz guter mechanischer Eigenschaften in Längsrichtung von geringer Bedeutung; denn dieser Prozeß der Folienherstellung ist aufgrund der üblichen geringen Anlagengröße weniger effizient als der Zwei-Stufen-Prozess.
   Simultan mit Reckrahmen gereckte (d. h. die extrudierte Primärfolie wird in CD und MD gleichzeitig verstreckt) Polypropylenfolie hat bisher keine praktische Bedeutung für die Anwendung als Trägerfolie für Klebebänder erlangt, da die Anlagetechnik relativ hohe laufende Kosten für die Folie bewirkt und die Investitionskosten gegenüber anderen Verfahren erheblich höher liegen. Das gilt für die Technik der Firma Kampf mit fest vorgegebenen Dimensionen des Reckrahmens (daher einem kaum veränderbaren Reckverhältnis) und die neuere Linearmotorentechnik mit variablen Reckverhältnissen von Firma Brückner. Letztere wird für spezielle biaxial verstreckte Polyesterfolien angewandt und hat für PP-Klebebänder keine Marktbedeutung.
   Als Reckprozesse sind in der Literatur das Blasverfahren (z. B. double bubble), der Kampf-Prozeß (nicht regelbare Reckung) und insbesondere der LISIM-Prozeß (Linearmotorverstreckung) beschrieben, z. B. J. Nentwig, Papier+Kunststoffverarbeiter Seite 22 Heft 12 (1998), Modem Plastics Seite 26 Märzheft (1996), Kunststoffe 85 Seite 1314 (1995), Schriften DE 37 44 854 A1, DE 39 28 454 A1.
- Beschichtung mit Haftklebstoff:
   Die Folie wird mit Klebstoff in verschiedenen Verfahren beschichtet. Von praktischer Bedeutung sind Schmelzhaftkleber auf der Basis von SIS-Blockcopolymeren und
   Kohlenwasserstoffharzen, Lösungsmittelhaftkleber auf Basis von Naturkautschuk, Kohlenwasserstoffharzen und Hexan bzw. Toluol und wässrige Acrylatdispersionen.
- Weitere Funktionsschichten:
   Zum Teil werden vor oder nach der Klebstoffbeschichtung weitere Funktionsschichten aufgebracht, wie z.B. Metallisierung mit Aluminium, Primerung (Beschichtung oder Coronabehandlung) zur Verbesserung der Haftung des Klebstoffs auf der Folie, Releasebeschichtung mit einem Trennmittel auf der Folienrückseite zur Erleichterung des Abrollens des Klebebandes oder Bedruckung.
- Konfektionierung:
   Die mit Klebstoff beschichteten Folienrollen (sog. Jumbos) werden in einem weiteren Arbeitsschritt zu Klebebandrollen geschnitten und anschließend verpackt.

Die US 5,145,718 A beschreibt einen neuen Prozess zur Verbesserung der Wirtschaftlichkeit der Fertigung solcher Klebebänder. Der wesentliche Gedanke besteht in der Integration der Beschichtung von Haftkleber und Release in den Prozeß der Folienherstellung im bekannten Zwei-Stufen-Prozess, wobei die Beschichtung der Folienherstellung zwischen den Schritten der Längs- und Querverstreckung erfolgt.

Aufgabe der Erfindung ist es, ein Verfahren zur Verstreckung zur Verfügung zu stellen, welches die Nachteile des Standes der Technik nicht aufweist, welches insbesondere bei einfacher und kostengünstiger Arbeitsweise ein hochwertiges, insbesondere in seinen Eigenschaften verbessertes Klebeband zur Verfügung stellt.

Gelöst wird die Aufgabe überraschend durch ein Verfahren, wie es im Anspruch 1 dargestellt wird. Die Unteransprüche betreffen Weiterentwicklungen dieses Verfahrens. Weitergehende Ansprüche betreffen ein Klebeband, erhältlich nach dem erfinderischen Verfahren, sowie verbesserte Ausführungsformen dieses Klebebandes.

Der Hauptanspruch betrifft entsprechend ein Verfahren zur Herstellung eines Folienklebebandes, bei welchem ein Verbund aus mindestens einer extrudierten Folienträgerschicht sowie sich auf einer der Seiten der Trägerfolienschicht befindlichen Haftkleberschicht biaxial verstreckt wird.

Die Haftkleberschicht kann hierbei homogen aus einer Haftklebemasse oder auch aus mehreren Schichtabfolgen von Haftklebern bestehen.

Das Verfahren der simultanen Verstreckung von Folienträgerschicht und Haftkleberschicht ermöglicht die Herstellung von Folienklebebändern mit überragenden mechanischen Eigenschaften in Längsrichtung und günstigen Kosten durch die Integration von Folienherstellung und Beschichtung und ggf. zusätzlich Wickeln von Rollen oder Stangen in einen In-Line-Prozeß. Die vorliegende Erfindung hat das Ziel, die Wirtschaftlichkeit und die Qualität von Klebebändern mit biaxial verstreckter Folie, insbesondere Polypropylenfolie, zu verbessern. Durch Wegfall der Herstellung von Folien als Zwischenprodukt in Rollenform werden die Bearbeitungskosten gesenkt und Abfälle (Folienreste bei automatischem Rollenwechsel an der Beschichtungsanlage) vermeiden. Als wesentliches Kennzeichen des erfindungsgemäßen Verfahrens werden Haftkleber und Folienträgerschicht (Folienrohstoff) simultan in einem Schritt biaxial verstreckt (gereckt). Als Reckprozess sind das Blasverfahren (z. B. double bubble), der Kampf-Prozeß (nicht regelbare Reckung) und insbesondere der LISIM-Prozeß (Linearmotorverstreckung) geeignet.

Die Herstellung der Primärfolie (ggf. gleichzeitig mit weiteren Funktionsschichten) erfolgt im Cast-Prozeß mit Extruder und Chill-Roll, die Beschichtung mit Haftkleber findet vor dem simultanen Verstrecken in einem geheizten Reckrahmen auf der Folie (d.h. auf der Trägerfolienschicht oder auf der Primerschicht) statt. Eine andere Ausführungsform vermeidet Beschichtung durch Coextrusion von Folienträgerschicht und Haftkleberschicht sowie ggf. weiterer Funktionsschichten. In der bevorzugten Form des simultanen Verstreckens wird während des Reckens durch die Kluppenbewegung in CD der Kluppenabstand kontinuierlich vergrößert, wodurch die Folie simultan zusätzlich in MD orientiert wird. Diese mechanischen Vorgänge können fest installiert (Kampf-Technologie) oder variabel angelegt sein, z.B. durch geeignete Antriebe (Brückner-Technologie) oder durch Abzugsgeschwindigkeit und Aufblasverhältnis beim Blasverfahren. Variable Orientierung ist von außerordentlichem Vorteil, da die Produktionsbreite und die mechanischen Eigenschaften der resultierenden Folie auf jede Anwendung flexibel angepasst werden können. Beim Einsatz von Blasanlagen bietet es sich an, den Vollschlauch nach dem Zusammenlegen ein- oder beidseitig zu schlitzen und in einem oder zwei getrennten Auftragssystemen zu beschichten. Die durch das Simultanreckverfahren resultierenden ca. 50 % höheren Festigkeiten der Folie bzw. des Klebebandes gegenüber solchen Produkten aus dem Zwei-Stufen-Prozeß kann sowohl zur Verbesserung der Produktqualität als auch als auch zur Reduzierung der Foliendicke genutzt werden. Beim Zwei-Stufen-Verfahren ist die Festigkeit in Querrichtung (CD) immer höher als in Längsrichtung (MD), was aus den Reckverhältnissen resultiert und der Tatsache, daß der Memory-Effekt des letzten Verfahrenschrittes (Querverstreckung) am stärksten ausgeprägt ist.
Wesentlich für das erfinderische Verfahren ist die hinreichend starke Verstreckung des Klebebandes insbesondere in Laufrichtung. Dies bedeutet die Erreichung eines Gesamtreckverhältnis von mindestens 1 : 25, vorzugsweise mindestens 1 : 40, also z. B. 1 : 50. Das Gesamtreckverhältnis ist das Produkt der Streckverhältnisse in MD und CD. Das Verhältnis des Streckverhältnisses in Längsrichtung zu dem in Querrichtung sollte über 0,6, vorzugsweise über 0,9 und besonders bevorzugt über 1,2 liegen. Dabei ergeben sich Spannungswerte bei 10 % Dehnung nach DIN 53457 in MD von mindestens 50, vorzugsweise mindestens 70 und besonders bevorzugt mindestens 100 N/mm². Die Tensile Strength (Zugfestigkeit) nach DIN 53455-7-5 in Längsrichtung liegt mindestens 160, vorzugsweise mindestens 190 und besonders bevorzugt mindestens 220 N/mm². Bei der Berechnung o. g. Kennzahlen wird bei der Division der Kräfte durch die Dicke nicht die Dicke des Klebebandes zugrundegelegt, sondern die der Folienträgerschicht. Die Klebkraft auf Stahl nach DIN EN 1939-Methode soll mindestens 1,3 N/cm, vorzugsweise mindestens 1,6 N/cm betragen, um ausreichende Haftung für Verpackungsanwendungen zu erzielen. Die Dicke des Klebebandes liegt vorzugsweise zwischen 35 und 65 µm, da zu hohe Foliendicken hohe Kräfte beim Verstrecken benötigen und das Klebeband für die Anwendung zu steif wird und bei zu niedrigen Dicken das Klebeband zu leicht dehnbar (weich) ist.

Die vorliegende Erfindung grenzt sich gegen die WO 96/37568 A1 ab, die dort genannten Folien sind vorzugsweise unverstreckt, Streckverhältnisse über 1 : 1.2 in MD und CD werden als nachteilig beschrieben. Weiterhin handelt es sich bei den in dieser Schrift genannten Produkten um Oberflächenschutzprodukte, bei denen eine schwach klebende Masse vorrangig durch Extrusionsbeschichtung aufgebracht wird.
Die hier vorliegende Erfindung hat den Focus auf Verpackungsanwendungen, insbesondere den Kartonverschluss, wobei eine gute Haftung auf rauhen Untergründen und eine geringe Dehnbarkeit der Folie erforderlich ist

Die vorliegende Erfindung erreicht ebenso wie die der US 5,145,718 A eine Verbesserung der Produktivität durch Integration von Folienherstellung und Klebstoffaufbringung. Sie ermöglicht jedoch anstelle der Beschichtung der teilverstreckten Folie mit Haftkleber und Release die Coextrusion eines mehrlagigen Vorproduktes aus Träger (Folie) und Haftkleber sowie optional weiterer Funktionsschichten wie Primer und Release, wodurch sich der Prozeß noch weiter vereinfacht Dies ist nach dem Verfahren der obengenannten US-Schrift nicht möglich, da sich ein klebendes Produkt nicht auf Reckwalzen verstrecken läßt, wohingegen das erfindungsgemäße Verfahren eine kontaktlose Verstreckung des Klebers ermöglicht. Ein weiterer Vorteil der vorliegenden Erfindung ist die Möglichkeit des Weglassens von Release. Wie dem Fachmann geläufig, führt Release bei Verpackungsklebebändem wie z.B. verstreckten Polypropylenklebebändern zu dem bekannten unangenehmen Knattergeräusch beim Abrollen. Dies ist insbesondere durch die Möglichkeit der Verwendung von Naturkautschuk- und Acrylatschmelzhaftklebern vermeidbar, welche die obengenannte Schrift nicht abdeckt. Naturkautschukschmelzhaftkleber sind extrem hochviskos, so daß sie bisher nicht in dünnen Schichten herstellbar sind.
Das neue Verfahren weist gegenüber der oben genannten Schrift den Vorteil auf, daß man durch die biaxiale Verstreckung (Gesamtreckverhältnis ca. 1 : 50) eines solchen Klebstoffs leicht zu einer viel dünneren Schicht gelangt als nur durch Querverstreckung (Streckverhältnis ca. 1 : 8) Das vorliegende Verfahren eröffnet auch die Möglichkeit, die Klebebandbahn anstelle einer Aufwicklung zu einem "Jumbo" mit nachfolgendem Schneidprozeß nach Durchlaufen eines Speichers gleich einer Aufwicklung in Endverbraucherlänge zuzuführen, also entweder einem Stangenwickler oder einer Schneidmaschine.

Ein ganz wesentlicher Unterschied zu der obengenannten Schrift und zu konventionellen Klebebändern mit biaxial verstreckter Folie besteht in der Qualität, insbesondere den verbesserten Eigenschaften des Klebebandes und der darin enthaltenen Folienschicht. Klebebänder mit Folien aus dem üblichen Zwei-Stufen-Prozess weisen in MD (Maschinenrichtung, Laufrichtung) relativ schwache mechanische Eigenschaften wie Zugfestigkeit (Reißkraft), 10 %-Modul (als Maß für den Widerstand gegen Verdehnung bei Abrollen oder Applizieren) Bruchdehnung auf, wohingegen diese Werte in Querrichtung immer erheblich besser sind. Klebebänder, insbesondere für Verpackungs- oder Haushaltsanwendungen, werden jedoch in Längsrichtung beansprucht. Das hat dazu geführt, daß für Anwendungsfälle mit erhöhten Anforderungen keine biaxial, sondern monoaxial (in Längsrichtung) verstreckte Folien eingesetzt werden. Derartige Folien sind jedoch aufgrund des Verfahrens und der eingesetzten Rohstoffe deutlich teuerer und weisen einige technische Nachteile wie Spleißneigung und Bildung von Kolbenringen auf. PP-Folien aus dem Zwei-Stufen-Prozeß werden üblicherweise für Klebebänder mit Release und SIS-Schmelzhaftkleber für das untere Marktsegment verwendet und entsprechen im Produktaufbau und Eigenschaften den in obengenannten Schriften aufgeführten Beispielen. Klebebänder aus solchen Folien mit Naturkautschuk-Lösungsmittetkleber oder Acrylatdispersionskleber ohne Release rollen leise ab, sie neigen beim Abrollen wegen der hohen Rückseitenhaftung zu Abrissen und müssen daher mit Haftklebern niedriger Performance (Klebkraft und Scherfestigkeit) ausgerüstet werden. Die hohe Rückseitenhaftung führt beim Abrollen zu Verdehnung der Folie, in Verbindung mit relativ weichen Folien (niedrige 10 %-Spannungswerte) aus dem Zwei-Stufen-Prozess wird der Kleber hochbeansprucht, wodurch diese Produkte eine schwache Performance und geringere Marktbedeutung aufweisen. Diese Problematik gilt daher auch für Produkte, welche entsprechend dem Stand der Technik hergestellt wurden, jedoch nicht für die Produkte mit überiegener Performance in Maschinenrichtung aus dem erfindungsgemäßen Verfahren mit simultaner biaxialer Verstreckung.

Im folgenden sind einige besonders vorteilhafte Ausführungsformen des erfinderischen Verfahrens beschrieben:
- Eine Ausführung ist die Integration des Schneidens von Mutterrollen, Stangenware oder Rollen in Verkaufsabmessung in das erfindungsgemäße Verfahrens. Hierdurch kann die Produktivität weiter gesteigert werden und die Herstellung von Rollen mit stark haftendem Kleber ohne ein Releasebeschichtung wird erleichtert. Hierzu können z. B. Schneidmaschinen mit sehr schnellem automatischem Rollenwechsel eingesetzt werden, bevorzugt wird der Einbau eines Produktspeichers für das An- und Abfahrens des Schneidautomaten eingebaut. Die Ausführung als Stangenware bietet eine Möglichkeit, ein breites Sortiment an Abmessungen leichter zu handhaben.
- Eine weitere Besonderheit der vorliegenden Erfindung ist die Möglichkeit der Vemetzung des Haftklebers im erfindungsgemäßen Verfahren. Möglichkeiten sind die Strahlenvernetzung mit UV-, Gamma- oder Elektronenstrahlen oder die chemische Vernetzung. Letztere ist möglich durch kontinuierliche Zudosierung von Vemetzem wie Epoxiden, Isocyanaten, Aziridinen etc. in den Klebstoff oder in eine Primerschicht, durch Coextrusion oder Beschichtung mit einer solche Vernetzer enthaltenden Masse, wobei die Vernetzer in der Primerschicht erst nach Diffusion in den Kleber aktiv werden.
- Ein Release-Effekt kann auf besonders einfache Weise durch Prägung erreicht werden. Besonders geeignet sind endlich lange erhabene Strukturen in Laufrichtung (MD). Die Prägung hat den weiteren Vorteil, daß die durch Nachkristallisation resultierenden Spannungen abgebaut werden können. Letzteres ist ebenfalls über eine Strukturierung oder leichte Schäumung der Masse möglich.
- Vor Verstreckung kann eine Releaseschicht, insbesondere lösungsmittelfrei, aufgebracht werden, insbesondere auf die der Haftkleberschicht abgewandten Seite der Trägerfolienschicht.
- Bei Bedarf kann vor Verstreckung und vor dem Aufbringen der Haftkleberschicht eine Primerschicht, insbesondere lösungsmittelfrei, aufgebracht werden, so daß sich zwischen der Trägerfolienschicht und der Haftkleberschicht eine Primerschicht befindet
- Vorteilhaft ist eine physikalische Vorbehandlung der Trägerfolienschicht zur Verbesserung der Haftung durch Flamm-, Plasma- oder Coronabehandlung.
   Es kann vorteilhaft sein, die Folienträgerschicht des Klebebandes zu thermofixieren.
- In einer der Ausführungsformen des erfinderischen Verfahrens wird der Haftkleber vor der biaxialen Verstreckung durch Kaschieren aufgebracht, als Übertragungsmedium können Trennpapier- oder Trennfolie oder ein Gurtband aus Silikon oder Fluorpolymer eingesetzt werden. Die Aufbringung des Haftklebers auf das Übertragungsmedium erfolgt in den für Klebebänder üblich Beschichtungsverfahren, insbesondere lösungsmittelfrei.
- Eine weitere Ausführungsform ist die Beschichtung des Klebstoffs aus der Schmelze durch geeignete Auftragswerke wie Düsen oder Walzen.
- Die bevorzugte Ausführungsform für das Aufbringen des Klebers auf die Trägerfolienschicht ist die Coextrusion. Hierfür sind Düsen mit Feedblock geeignet, bei schwierigen Viskositätsverhältnissen wird eine Multimanifold-Die bevorzugt
- Die Erfindung schließt die Verwendung von Lösungsmitteln nicht aus, in bevorzugten Ausführungsformen ist das Verfahren jedoch völlig lösungsmittelfrei, besonders bevorzugt ist eine Verarbeitung aller Komponenten aus dem Schmelze, beispielsweise die Herstellung aller Schichten des Verbundes aus der Schmelze.
- Es hat sich als vorteilhaft erwiesen, Maßnahmen gegen den Nachschrumpf des Klebebandes zu ergreifen, welcher zum Teleskopieren der Rollen oder Verformung des Pappkerns führen kann. Dies sind Thermofixierung des Verbundes (Temperung des Klebebandes unterhalb der Kristallitschmelztemperatur des Rohstoffs der Folienschicht), die Zwischenlagerung von Jumbos vor dem Schneiden zu Rollen und die Verwendung von Pappkernen, welche mit elastischem Schaum auf der Außenlage versehen sind.
- Nach der Verstreckung ist es von Vorteil, die Haftklebemasse zu vemetzen, insbesondere durch energiereiche Strahlung oder chemisch.
- Im Anschluß hat es sich als vorteilhaft herausgestellt, das Klebeband auf Pappkerne mit elastischer Schaumauflage zu wickeln.

Die Rohstoffe für die Folie können Polyester (z. B. PET, PEN oder PET-Copolymer), Polyamide (z. B. PA 6, PA 66, PA 46), Polystyrol (kristallin mit syndiotaktischer Struktur oder ataktisch amorph), Polyvinylchlorid oder andere verstreckbare Polymere sein. Wegen der günstigen Kosten und hohen Festigkeiten werden vorrangig Polyolefine eingesetzt werden, z. B. Polyethylen, Polypropylen, sowie Copolymere von Ethylen oder Propylen. Solche Copolymere können verschieden Strukturen haben, z.B. Random, Minirandom, Block, Pfropfung oder Homopolymere mit eingeschlossenen amorphen Phasen. Bevorzugt ist teilkristallines Polypropylen mit überwiegend isotaktischer Struktur ohne oder mit nur geringem Comonomeranteil, insbesondere mit einem Schmelzindex von 1 bis 10 g/10 min (gemessen bei 230 °C und 21,6 N). Solche Polypropylene sind in Encycl. Polym. Sci. Technol. 13 (1988) und in Ullmann's Encyclopedia of Industrial Chemistry A21 (1992) beschrieben.
Diese Rohstoffe können jeweils allein oder in Abmischung eingesetzt werden, wobei die dem Fachmann geläufigen Additive wie z.B. Pigmente, Füllstoffe, Antistatika, Antioxidantiken, Lichtschutzmittel etc. mitverwendet werden können. Derartige Stoffe sind im Plastics Additives Handbook, 5^{th} edition, Hanser Publishers, München beschrieben. Für diese Anwendung ist der Zusatz von Nucleierungmittel empfehlenswert, um den Nachschrumpf des Klebebandes zu reduzieren.

Bei den Haftklebern kommen alle gängigen Typen in Frage, z. B. die in US 5,145,718 A beschriebenen, einschließlich der genannten Additive. Bevorzugt werden Haftschmelzkleber eingesetzt, die durch Coextrusion, Extrusions- oder Kalander-Beschichtungen aufgebracht werden. In Frage kommen vor allem Kleber auf Basis von Kautschuk. Solche Kautschuke können z. B. Homo- oder Copolymere des Isobutylens, des 1-Butens, des Vinylacetats, von Acrylsäureestern, des Butadiens oder des Isoprens sein. Besonderes Interesse haben Rezepturen auf Basis von Acrylsäureestem, Butadien oder Isopren. Hervorzuheben sind sowohl Mischungen aus Naturkautschuk und Harz(en) sowie schmelzbare Polyacrylsäureester mit Blockstruktur zur physikalischen Vemetzung. Gerade mit solchen Rezepturen gelingt es, geeignete Rezeptierungen zu finden, die auch bei starkem Klebvermögen keine Beschichtung oder Coextrusion von Release benötigen.

Für die unterschiedlichen Ausführungsformen des erfinderischen verfahrens, insbesondere in Hinblick auf die unterschiedlichen Beschichtungsweisen, muß die Verstreckbarkeit des Haftklebers durch Wahl einer geeigneten Rezeptur und/oder Temperaturführung optimiert werden, das bedeutet, daß z. B. bei Naturkautschuk kein zu hoher Mooney-Wert vorliegen sollte. Es werden, insbesondere im Fall der Coextrusion, Haftkleber aus Harzen und einer Mischung von Natur- und Styrol-Isopren-Blockcopolymerkautschuk bevorzugt, weil sich die Viskosität der Klebstoffschicht über die Mischung der beiden Kautschuke an die Viskosität der Folienträgerschicht anpassen läßt, was die Durchführung der Prozesse vereinfacht Die Anforderungen an Verarbeitbarkeit beim Beschichten, Extrudieren oder Verstrecken können die Auswahl an Haftklebepolymeren einschränken, was die Notwendigkeit einer Vemetzung nach sich zieht. Nach dem Verstreckungsvorgang kann der Kleber deshalb vorteilhaft durch energiereiche Strahlung wie Elektronenstrahlung oder UV-Licht oder durch dem Kleber oder dem Primer zugesetzte chemische Vemetzungsmittel vemetzt werden, um die anwendungsgerechte Scherfestigkeit zu erreichen (im Falle des dem Primer zugesetzten Vemetzungsmittel diffundiert dieses später in den Haftkleber). Bei Rezepturen aus Basis von Naturkautschuk liegt der bevorzugte Anteil von Harzen und Weichmachern zusammen über 100 phr und bei Blockcopolymeren des Isoprens und/oder Butadiens unter 100 phr.
Acrylatmassen neigen bei Verwendung als Haftklebemasse für Verpackungsklebebänder wegen Foliendehnung im Applikator leicht zum unerwünschten Öffnen von Kartonverschlüssen, wegen des im Vergleich zu Produkten mit Folie aus dem Zwei-Stufen-Verfahren wesentlich höheren Moduls in MD wird hier jedoch eine wesentliche Verbesserung der Qualität von CST erreicht. Bei Klebemassen, die in dieser Hinsicht nicht kritisch sind, kann der erhöhte Modul zur Reduzierung der Trägerdicke genutzt werden. Zur Optimierung der Eigenschaften kann die zum Einsatz kommende Selbstklebemasse (Kleber) mit einem oder mehreren Additiven wie Klebrigmachern (Harzen), Weichmachern, Füllstoffen, Pigmenten, UV-Absorbern, Lichtschutz-, Alterungsschutzmitteln, Photoinitiatoren, Vemetzungsmitteln oder Vemetzungspromotoren abgemischt sein. Klebrigmacher sind beispielsweise Kohlenwasserstoffharze (z. B. aus ungesättigten C5- oder C7-Monomeren), Terpenphenolharze, Terpenharze aus Rohstoffen wie α- oder β-Pinen, aromatische Harze wie Cumaron-Inden-Harze oder Harze aus Styrol oder α-Methylstyrol, wie Kolophonium und seine Folgeprodukte wie disproportionierte, dimerisierte oder veresterte Harze, wobei Glycole, Glycerin oder Pentaerythrit eingesetzt werden können, sowie weitere Harze (wie beispielsweise aufgeführt in Ullmanns Enzyklopädie der technischen Chemie, Band 12, S. 525 - 555 (4. Aufl.). Weinheim).

Geeignete Füllstoffe und Pigmente sind beispielsweise Ruß, Titandioxid, Calciumcarbonat, Zinkcarbonat, Zinkoxid, Silicate oder Kieselsäure. Geeignete beimischbare Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (z. B. Nitril-oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone. Vernetzungsmittel sind beispielsweise Phenolharze oder halogenierte Phenolharze, Melamin- und Formaldehydharze. Geeignete Vernetzungspromotoren sind z. B. Maleinimide, Allylester wie Triallylcyanurat, mehrfunktionelle Ester der Acryl- und Methacryläure.

Da die Beschichtung oder Coextrusion der Klebemassen in 40 oder 50facher Dicke des Masseauftrages des Endproduktes erfolgen kann, lassen sich selbst sehr hochviskose Massen einsetzen. Dadurch lassen sich insbesondere hochviskose Naturkautschukmassen, die in ca. 20 µm Masseauftrag nicht und selbst bei 100 µm praktisch nur schwer umsetzten lassen, relativ leicht bei ca. 1 mm Masseauftrag realisieren. Naturkautschukmassen haben für das erfinderische Verfahren eine besondere Bedeutung. Dies liegt in einer verbesserte Produktqualität (guter Tack, Low-Noise-Verhalten) und erheblich geringeren Rohstoffkosten der Klebstoff-Rezeptur (Kautschuk und der Tackifier) im Vergleich zu konventionellen Schmelzhaftklebem auf Basis von Blockcpolymeren begründet. Die relativ hohe Schichtdicke erlaubt den Einsatz von hochwertigem Naturkautschuk, da die Viskosität für die Extrusion bzw. die Beschichtung kein kritischer Parameter ist.
Ein Release-Effekt kann durch Beschichtung oder Coextrusion bekannter Releasemittel (ggf. mit anderen Polymeren abgemischt) erfolgen. Beispiele sind Stearyl-Verbindungen (z. B. Polyvinylstearylcarbamat, Stearylverbindungen von Übergangsmetallen wie Cr oder Zr, Hamstoffe aus Polyethylenimin und Stearylisocyanat, Polysiloxane (z. B. als Copolymer mit Polyurethanen oder als Propfcopolymer auf Polyolefin), thermoplastische Fluorpolymere. Der Begriff Stearyl steht als Synonym für alle geraden oder verzweigten Alkyle oder Alkenyle mit einer C-Zahl von mindestens 10, wie z. B. Octadecyl.
Als Primer sind die bekannten Dispersion- und Lösungsmittelsysteme verwendbar. Im Fall der Coextrusion einer solchen Schicht bieten sich z. B. MSA-gepfropfte Polyolefine, lonomere, Copolymere des Styrols mit Butadien oder Isopren, amorphe Polyester, chlorierte Polyolefine, Polypropylenblockcopolymere mit sehr hohem Comonomeranteil oder Mischungen aus PP mit PE-Copolymeren sehr niedriger Dichte oder EPM/EPDM an.

Die Erfindung betrifft weiterhin ein biaxial verstrecktes Folienklebeband, welches nach dem erfinderischen Verfahren oder einer seiner Weiterentwicklungen erhalten werden kann, bestehend aus einem Verbund aus mindestens einer extrudierten Trägerfolienschicht und einer Haftkleberschicht auf einer der Seiten der Trägerfolienschicht, und eine Spannung bei 10 % Dehnung In Längsrichtung von mindestens 65 N/mm² aufweist.

Die Haftkleberschicht kann dabei aus einer einzigen Haftklebemasse oder auch aus mehreren Einzelschichten bestehen, wobei eine derartige Schichtabfolge auch aus unterschiedlichen Klebemasse zusammengesetzt sein kann.

Vorteilhaft enthält die Folienträgerschicht zumindest ein Nucleierungsmittel. Bevorzugt besteht die Folienträgerschicht überwiegend aus isotaktischern Polypropylen. Weiterhin ist es von Vorteil, wenn die Folienträgerschicht Polypropylen mit einem Schmelzindex von 1 bis 10 g/10 min enthält. Vorteilhaft ist die Trägerschicht so gereckt, daß die Spannung bei 10 % Dehnung in Längsrichtung bevorzugt mindestens 70 N/mm², sehr bevorzugt mindestens 100 N/mm² beträgt. Weiterhin vorteilhaft ist die Trägerschicht so gereckt ist, daß die Tensile Strength in Längsrichtung mindestens 160 N/mm², bevorzugt mindestens 190 N/mm², sehr bevorzugt mindestens 220 N/mm² beträgt
Bei einer weiteren vorteilhaften Ausführungsform des Klebebandes besteht die Folienträgerschicht überwiegend aus Polyethylenterephthalat.

Es ist von Vorteil für das Folienklebeband, wenn die Haftkleberschicht Naturkautschuk und/oder mindestens ein Styrol-Isopren-Blockcopolymer enthält. Weiterhin ist es günstig, wenn die Haftkleberschicht mindestens ein Harz enthält.

Die Klebkraft auf Stahl beträgt vorteilhaft mindestens 1,3 N/cm, bevorzugt mindestens 1,6 N/cm, die Dicke des Folienklebebandes beträgt vorteilhaft mindestens 35 mm, bevorzugt zwischen 35 mm und 65 mm.

### Beispiele

Im folgenden soll die Erfindung durch eine Reihe von Beispielen näher erläutert werden, ohne sich durch die Wahl der untersuchten Proben unnötig beschränken zu wollen.

### Prüfmethoden

Die in den Beispielen genannten Meßergebnisse wurden bei Normklima nach DIN 50014 - 23/50- Teil 1 ermittelt.
Die Klebkraft auf Stahl bzw. Trägerrückseite erfolgte nach DIN EN 1939.
Der Masseauftrag wurde durch Differenzwägung nach Abwaschen der Klebemasse mit Hexan bestimmt.
Zur Charakterisierung des Kautschuks wurde die Mooney-Viskosität herangezogen. Die Mooney-Viskosität wurde nach ASTM D 1646 geprüft.
Die mechanische Daten wurden nach DIN 53455-7-5 bestimmt, wobei die Messung frühestens nach einer Woche stattfand, damit die Folie sich im Endzustand (Nachkristallisation) befand
Die Schmelzindices wurde nach ISO 1133 bei 230 °C und 21.6 N gemessen.
Die Viskosität einer 1 %ige Lösung vom Naturkautschuk in Toluol wurde in einem Vogel-Ossag-Viskosimeter nach DIN 51561 gemessen. Die Berechnung des K-Wertes aus der relativen Viskosität ist bei Fikentscher, Cellulose-Chemie 13 (1932), S. 58 ff und Polymer 8 (1967), S. 381 ff beschrieben und erfolgte in entsprechender Weise.

### Untersuchte Beispiele

### Beispiel 1

Auf einer Kampf-Anlage (Flex-lip-Düse Breite 500 mm, Chillroll mit Wasserbad, Durchsatz ca. 1200 kg/h) wurde ein PP-Homopolymer mit einem Schmelzindex von 8 g/ 10 min (Daplen KF 201) unter Zusatz von 2000 ppm 3,4-Dimethydibenzylidene-sorbitol als Nucleierungsmittel extrudiert, auf der Chillroll (Durchmesser 2500 mm) abgekühlt, mit einem Filzrakel mit einem chlorhaltigen Polymerprimer (Superchlon™) angewischt und ein Stück weiter nach Ablüftung des Primers aus einer Schmelzdüse mit einem Acrylatblockcopolymer (Butylacrylat-co-Methylmethacrylat) beschichtet Dieser Verbund durchlief die Simultanreckeinrichtung bei einer Ofentemperatur von 160 °C und wurde mit 70 m/min aufgewickelt Das Reckverhältnis war längs 1 : 7 und quer 1 : 7,5. Die mit Klebstoff in Berührung kommenden Walzen wurden zuvor mit einem Klebeband mit Silikonkautschukoberfläche abgeklebt.
Das erhaltene Produkt weist folgende Daten auf:
- Klebkraft auf Stahl: 3,5 N/cm
- Klebmasseauftrag: 30 g/m²
- Foliendicke: 40 µm
- Spannung bei 10 % Dehnung in MD: 77 N/mm²
- Tensile Strength in MD: 172 N/mm²

### Beispiel 2

Auf einer Triplex-Folienblas-Anlage mit einem Schlauchumfang von 1,5 m wurden drei Schichtem coextrudiert:
- A = isotaktisches PP-Homopolymer mit einem Schmelzindex von 3 g/10 min (Exxon PP 4352 F3) unter Zusatz von 2500 ppm MDBS Nucleierungsmittel
- B = Copolymerisat aus je ½ EVA-Copolymer (Ethylenvinylacetat) mit 28 % VA (Vinylacetat) (Escorene UL 728) und PP-Blockcopolymer mit ca. 6,5 % Ethylen (Novolen 2309 L)
- C = EVA-Copolymer mit 45 % EVA (Levapren 450, der Schmelzindex wurde it. Hersteller bei dieser Charge zu 3 g/10 min bei 190 °C gemessen)

Der Schlauch wurde beidseitig geschlitzt, aufgewickelt und zu Rollen geschnitten. Wegen Teleskopierneigung der Rollen wurden Pappkeme mit 2 mm dicker Aussenlage aus PE-Schaum verwendet. Die klebstoffberührenden Teile der Anlage waren aus Teflon oder Silikon. Das erhaltene Produkt weist folgende Daten auf:
- Klebkraft auf Stahl: 1,1 N/cm (längs)
- Klebmassendicke: 20 µm
- Primerdicke: 5 µm
- Foliendicke: 30 µm
- Spannung bei 10 % Dehnung in MD: 95 N/mm²
- Tensile Strength in MD: 211 N/mm²

Die Dicken wurden nach Mikrotomschnitt mikroskopisch ermittelt.

### Beispiel 3

Auf einer LISIM-Anlage wurden ein PP-Homopolymer mit einem Schmelzindex von 2 g/ 10 min (Inspire H301-02AS) und ein Compound (aus 90 Gew.-% aus o. g. Polymers und 10 Gew.-% aus Polyvinylstearylcarbamat) bei 198 °C coextrudiert, auf einer Chillroll abgekühlt, auf der reinen PP-Seite coronabehandelt; darauf aus einer Schmelzdüse mit einem SIS-Schmelzhaftkleber (bestehend aus 100 phr SIS Vector 4111, 110 phr Harz Escorez 2203, 10 phr Weichmacher Flexon 876 und 2 phr Antioxidant Irganox 1010) beschichtet, dieser Verbund durchlief die Simultanreckeinrichtung bei einer Ofentemperatur von 155 °C und wurde mit 20 m/min aufgewickelt. Das Reckverhältnis war längs 1 : 9 und quer 1 : 5. Die mit Klebstoff in Berührung kommenden Walzen wurden zuvor mit einem Klebeband mit Silikonkautschukoberfläche abgeklebt.
Das erhaltene Produkt weist folgende Daten auf:
- Klebkraft auf Stahl: 5,5 N/cm
- Klebmasseauftrag: 19 g/m²
- Dicke der Folienträgerschicht: 30 µm
- Dicke der Releaseschicht: 1 µm
- Spannung bei 10 % Dehnung in MD: 110 N/mm²
- Tensile Strength in MD: 250 N/mm²

Die Dicken wurden aus der Gesamtdicke von 31 µm und den Extruderausstoßleistungen berechnet.

### Beispiel 4

Das Muster wurde wie in Beispiel 3, jedoch mit folgenden Änderungen hergestellt
- zusätzliche Coextrusionsschicht als Primer (PP Elastomer HiFax CA 10 A),
- keine Coronabehandlung.
Das erhaltene Produkt weist folgende Daten auf:
- Klebkraft auf Stahl: 5,2 N/cm
- Klebmasseauftrag: 20 g/m²
- Dicke der Folienträgerschicht: 30 µm
- Dicke der Releaseschicht: 1 µm
- Dicke der Primerschicht: 2 µm
- Spannung bei 10 % Dehnung in MD: 110 N/mm²
Tensile Strength in MD: 250 N/mm²

### Beispiel 5

Ein PP-Copolymer mit ca. 2 % Ethylen und einem Schmelzindex von 5 g/10 min wurde in 1,5 mm Stärke extrudiert, einseitig flammvorbehandelt und mit einem Klebstofffilm von 1 mm Stärke kaschiert. Der Klebstofffilm wurde durch Kalandrieren hergestellt und hatte folgende Zusammensetzung: 45 Gew.-% Naturkautschuk mit einem Mooney-Wert von 46, 1,4 Gew.-% Antioxidant BKF, 33,21 Gew.-% Hercotac 205, 0,39 Gew.-% Suprasec DNR, 12 Gew.-% Wollfett und 8 Gew.-% Farbbatch Avana (Eisenoxide und Titandioxid mit einem Kolophoniumester als Bindemittel). Beide Komponenten wurden im Frischzustand verwendet. Das Muster wurde quadratisch zugeschnitten und nach 60 sec. Vorwärmung bei 180 °C simultan verstreckt, das Streckverhältnis wurde in beide Richtungen auf 1 : 7 festgelegt Die erhaltene Probe wurde in 15 mm breite Streifen zerschnitten und diese zu einer kleinen Musterrolle von Hand aufgewickelt. Nach 4 Wochen Lagerung bei Raumtemperatur ließ sich das Muster leise und störungsfrei abwickeln und wies folgende Daten auf:
- Klebkraft auf Stahl: 1,6 N/cm
- Klebmasseauftrag: 25 g/m²
- Foliendicke: 30 µm
- Spannung bei 10 % Dehnung in MD: 65 N/mm²
- Tensile Strength in MD: 160 N/mm²
   Bei einer Wiederholung dieses Versuchs mit einem hochmolekularen Kautschuk (RSS1, Mooney-Wert 93) löste sich beim Verstrecken die Klebschicht teilweise vom Untergrund ab und wies Risse auf.

### Beispiel 6

Eine Dreischichtfolie mit folgendem Aufbau wurde coextrudiert:
- Compound aus 90 Gew.-% aus PP-Homopolymer mit einem Schmelzindex von 2 g/10 min und 10 Gew.-% Polyvinylstearylcarbamat (0,1 mm)
- PP-Homopolymer einem Schmelzindex von 2 g/10 min (1,5 mm)
- PP Elastomer HiFax (0,1 mm)
- SIS-Schmelzhaftkleber bestehend aus 50 phr SIS Vector 4111, 50 phr Naturkautschuk (K-Wert nach Fikentscher), 110 phr Harz Escorez 2203, 10 phr Weichmacher Flexon 876 und 2 phr Antioxidant Irganox 1010 (1,0 mm)

Die Stärke der einzelnen Schichten wurde durch mikroskopische Untersuchung festgestellt und ist in Klammern angegeben. Das Muster wurde quadratisch zugeschnitten und nach 60 sec. Vorwärmung bei 158 °C simultan verstreckt, das Streckverhältnis wurde in beide Richtungen auf 1 : 6,9 festgelegt. Die erhaltene Probe wurde in 15 mm breite Streifen zerschnitten und diese zu einer kleinen Musterrolle von Hand aufgewickelt.

### Beispiel 7

Polyethylenterephthalatgranulat wurde im Vakuumtrockenschrank von Feuchtigkeit befreit und auf eine 20 °C kalte Chillroll als Folie extrudiert. Nach Vorbehandlung mit einem wässrigen Primer auf PVDC-Basis (Haloflex) wurde ein Acrylathaftklebstoff mit einem K-Wert von 78 (Zusammensetzung 48 Gew.-% Butylacrylat, 48 Gew.-% Ethylhexylacrylat und 4 Gew.-% Acrylsäure) mit einer Schmelzdüse aufgetragen. Dieser Verbund wurde bei 130 °C simultan verstreckt, das Streckverhältnis wurde in beide Richtungen auf 1 : 3,6 festgelegt und anschließend bei 220 °C thermofixiert.
Das Muster weist folgende Daten auf:
- Klebkraft auf Stahl: 4 N/cm
- Klebmasseauftrag: 25 g/m²
- Foliendicke: 25 µm
- Spannung bei 10 % Dehnung in MD: 120 N/mm²
Tensile Strength in MD: 160 N/mm²

### Vergleichsbeispiel 1

Eine Folie (35 MB 250 von Mobil Plastics) aus dem 2-Stufenreckprozeß wurden auf einer Produktionsanlage mit Polyvinylstearycarbamat (aus Toluol) und einem Schmelzhaftkleber wie in Beispiel 3 beschrieben beschichtet.
Das Muster weist folgende Daten auf:
- Klebkraft auf Stahl: 5,3 N/cm
- Klebmasseauftrag: 23 g/m²
- Foliendicke: 35 µm
- Spannung bei 10 % Dehnung in MD: 50 N/mm²
- Tensile Strength in MD: 145 N/mm²

### Vergleichsbeispiel 2

Eine Folie (PP 28 µm von Pao Yan) aus dem 2-Stufenreckprozeß wurden auf einer Produktionsanlage mit Polyvinylstearycarbamat (aus Toluol) und einem Schmelzhaftkleber wie in Beispiel 3 beschrieben beschichtet.
Das Muster weist folgende Daten auf:
- Klebkraft auf Stahl: 5,0 N/cm
- Klebmasseauftrag: 19 g/m²
- Foliendicke: 28 µm
- Spannung bei 10 % Dehnung in MD: 46 N/mm²
- Tensile Strength in MD: 150 N/mm²

### Vergleichsbeispiel 3

Eine Folie (Torayfan YT 40 µm von Toray) aus dem 2-Stufenreckprozeß wurden auf einer Produktionsanlage mit Polyvinylstearycarbamat (aus Toluol) und einem Schmelzhaftkleber wie in Beispiel 3 beschrieben beschichtet.
Das Muster weist folgende Daten auf:
- Klebkraft auf Stahl: 6,0 N/cm
- Klebmasseauftrag: 22 g/m²
- Foliendicke: 40 µm
- Spannung bei 10 % Dehnung in MD: 40 N/mm²
- Tensile Strength in MD: 65 N/mm²

### Vergleichsbeispiel 4

Das Patentbeispiel 1 der US 5145718 wurde nachgestellt, abweichend wurde Polyvinylstearycarbamat eingesetzt, da das beschriebenen Release nicht erhältlich war. Das Muster weist folgende Daten auf:
- Klebkraft auf Stahl: < 1 N/cm
- Klebmasseauiftrag: 2 g/m²
- Foliendicke: 30 µm
- Spannung bei 10 % Dehnung in MD: 50 N/mm²
Tensile Strength in MD: 155 N/mm²

## Patentansprüche

1. Verfahren zur Herstellung eines Folienklebebandes, **dadurch gekennzeichnet, daß**
ein Verbund
aus mindestens einer extrudierten Trägerfolienschicht
und einer Haftkleberschicht auf einer der Seiten der Trägerfolienschicht biaxial verstreckt wird.

2. Verfahren nach Anspruch 1, **dadurch gekennzeichnet, daß**
sich zwischen der Trägerfolienschicht und der Haftkleberschicht eine Primerschicht befindet.

3. Verfahren nach zumindest einem der vorangehenden Ansprüche, **dadurch gekennzeichnet, daß**
sich auf der der Haftkleberschicht abgewandten Seite der Trägerfolienschicht eine Releaseschicht befindet.

4. Verfahren nach zumindest einem der vorangehenden Ansprüche, **dadurch gekennzeichnet, daß**
die Folienträgerschicht des Klebebandes thermofixiert wird.

5. Verfahren nach zumindest einem der vorangehenden Ansprüche, **dadurch gekennzeichnet, daß**
der Verbund nach dem Verstrecken thermofixiert wird.

6. Verfahren nach zumindest einem der vorangehenden Ansprüche, **dadurch gekennzeichnet, daß**
der Haftkleber durch eine Schmelzbeschichtung auf die Trägerfolienschicht aufgebracht wird.

7. Verfahren nach zumindest einem der vorangehenden Ansprüche, **dadurch gekennzeichnet, daß**
der Haftkleber durch Coextrusion auf die Trägerfolienschicht aufgebracht wird.

8. Verfahren nach zumindest einem der Ansprüche 1 bis 6, **dadurch gekennzeichnet, daß** der Haftkleber vor dem Verstrecken durch Kaschieren auf die Trägerfolienschicht beziehungsweise auf die Primerschicht aufgebracht wird.

9. Verfahren nach zumindest einem der vorangehenden Ansprüche, **gekennzeichnet durch** eine lösungsmittelfreie Vorgehensweise, daß insbesondere alle Schichten des Verbundes aus der Schmelze hergestellt werden.

10. Verfahren nach zumindest einem der vorangehenden Ansprüche, **dadurch gekennzeichnet, daß**
der Haftkleber durch energiereiche Strahlung oder chemisch vernetzt wird.

11. Verfahren nach zumindest einem der vorangehenden Ansprüche, **dadurch gekennzeichnet, daß**
die simultane Verstreckung auf einer Anlage mit Linearmotor-Technologie durchgeführt wird.

12. Verfahren nach zumindest einem der vorangehenden Ansprüche, **dadurch gekennzeichnet, daß**
der Verbund nach der Verstreckung in einem In-line-Prozeß einem Stangenwickler oder einer Schneidemaschine zugeführt wird.

13. Verfahren nach zumindest einem der vorangehenden Ansprüche, **dadurch gekennzeichnet, daß**
das Gesamtstreckverhältnis mindestens 1 : 40 beträgt.

14. Verfahren nach zumindest einem der vorangehenden Ansprüche, **dadurch gekennzeichnet, daß**
das Verhältnis der Streckverhältnisse in Längsrichtung zu dem in Querrichtung über 0,9 liegt.

15. Verfahren nach zumindest einem der vorangehenden Ansprüche, **dadurch gekennzeichnet, daß**
das Klebeband auf Pappkeme mit elastischer Schaumauflage gewickelt wird.

16. Biaxial verstrecktes Folienklebeband, erhältlich nach zumindest einem der vorangehenden Ansprüche, bestehend aus einem Verbund aus mindestens einer extrudierten Trägerfolienschicht und einer Haftkleberschicht auf einer der Seiten der Trägerfolienschicht mit einer Spannung bei 10 % Dehnung in Längsrichtung von mindestens 50 N/mm².

17. Folienklebeband nach Anspruch 16, **dadurch gekennzeichnet, daß**
die Folienträgerschicht zumindest ein Nucleierungsmittel enthält.

18. Folienklebeband nach zumindest einem der Ansprüche 16 und 17, **dadurch gekennzeichnet, daß** die Folienträgerschicht überwiegend aus Isotaktischem Polypropylen besteht.

19. Folienklebeband nach zumindest einem der Ansprüche 16 bis 18, **dadurch gekennzeichnet, daß**
die Folienträgerschicht Polypropylen mit einem Schmelzindex von 1 bis 10 g/10 min enthält.

20. Folienklebeband nach zumindest einem der Ansprüche 18 bis 19, **dadurch gekennzeichnet, daß**
der Verbund so gereckt ist, daß die Spannung bei 10 % Dehnung in Längsrichtung mindestens 70 N/mm², sehr bevorzugt mindestens 100 N/mm² beträgt.

21. Folienklebeband nach zumindest einem der Ansprüche 16 bis 20, **dadurch gekennzeichnet, daß**
der Verbund so gereckt ist, daß die Tensile Strength in Längsrichtung mindestens 160 N/mm², bevorzugt mindestens 190 N/mm², sehr bevorzugt mindestens 220 N/mm² beträgt.

22. Folienklebeband nach zumindest einem der Ansprüche 16 und 17, **dadurch gekennzeichnet, daß** die Folienträgerschicht überwiegend aus Polyethylenterephthalat besteht

23. Folienklebeband nach zumindest einem der Ansprüche 16 bis 22, **dadurch gekennzeichnet, daß**
die Haftkleberschicht Naturkautschuk enthält.

24. Folienklebeband nach zumindest einem der Ansprüche 16 bis 23, **dadurch gekennzeichnet, daß**
die Haftkleberschicht mindestens ein Styrol-Isopren-Blockcopolymer enthält.

25. Folienklebeband nach zumindest einem der Ansprüche 16 bis 24, **dadurch gekennzeichnet, daß**
die Haftkleberschicht mindestens ein Harz enthält.

26. Folienklebeband nach zumindest einem der Ansprüche 16 bis 25, **dadurch gekennzeichnet, daß**
die Klebkraft auf Stahl mindestens 1,3 N/cm, bevorzugt mindestens 1,6 N/cm beträgt.

27. Folienklebeband nach zumindest einem der Ansprüche 16 bis 26, **gekennzeichnet durch** eine Dicke von mindestens 35 mm, bevorzugt eine Dicke zwischen 35 mm und 65 mm.

## Claims

1. Method of producing a film adhesive tape, **characterized in that** a composite comprising at least one extruded backing film layer and a pressure sensitive adhesive layer on one side of the backing film layer is biaxially drawn.

2. Method of Claim 1, **characterized in that** between the backing film layer and the pressure sensitive adhesive layer there is a primer layer.

3. Method of at least one of the preceding claims, **characterized in that** on the other side of the backing film layer from the pressure sensitive adhesive layer there is a release layer.

4. Method of at least one of the preceding claims, **characterized in that** the film backing layer of the adhesive tape is heat-set.

5. Method of at least one of the preceding claims, **characterized in that** the composite after drawing is heat-set.

6. Method of at least one of the preceding claims, **characterized in that** the pressure sensitive adhesive is applied to the backing film layer by melt coating.

7. Method of at least one of the preceding claims, **characterized in that** the pressure sensitive adhesive is applied to the backing film layer by coextrusion.

8. Method of at least one of Claims 1 to 6, **characterized in that** the pressure sensitive adhesive is applied to the backing film layer or to the primer layer prior to drawing, by lamination.

9. Method of at least one of the preceding claims, **characterized by** a solvent-free procedure such that in particular all of the layers of the composite are produced from the melt.

10. Method of at least one of the preceding claims, **characterized in that** the pressure sensitive adhesive is crosslinked chemically or by means of high-energy radiation.

11. Method of at least one of the preceding claims, **characterized in that** the simultaneous drawing is carried out on a unit with linear motor technology.

12. Method of at least one of the preceding claims, **characterized in that** after drawing in an in-line operation the composite is supplied to a roll winder or to a slitting machine.

13. Method of at least one of the preceding claims, **characterized in that** the overall draw ratio is at least 1:40.

14. Method of at least one of the preceding claims, **characterized in that** the ratio of the draw ratios in machine direction to the ratio in transverse direction is above 0.9.

15. Method of at least one of the preceding claims, **characterized in that** the adhesive tape is wound onto paperboard cores with an elastic foam lining.

16. Biaxially drawn film adhesive tape obtainable according to at least one of the preceding claims, composed of a composite comprising at least one extruded backing film layer and a pressure sensitive adhesive layer on one side of the backing film layer and having a stress at 10% elongation in machine direction of at least 50 N/mm².

17. Film adhesive tape of Claim 16, **characterized in that** the film backing layer comprises at least one nucleating agent.

18. Film adhesive tape of at least one of Claims 16 to 17, **characterized in that** the film backing layer is composed predominantly of isotactic polypropylene.

19. Film adhesive tape of at least one of Claims 16 to 18, **characterized in that** the film backing layer comprises polypropylene having a melt index of from 1 to 10 g/10min.

20. Film adhesive tape of at least one of Claims 16 to 19, **characterized in that** the composite is stretched such that the stress at 10% elongation in machine direction is at least 70 N/mm², very preferably at least 100 N/mm².

21. Film adhesive tape of at least one of Claims 16 to 20, **characterized in that** the composite is stretched such that the tensile strength in machine direction is at least 160 N/mm², preferably at least 190 N/mm², very preferably at least 220 N/mm².

22. Film adhesive tape of at least one of Claims 16 and 17, **characterized in that** the film backing layer is composed predominantly of polyethylene terephthalate.

23. Film adhesive tape of at least one of Claims 16 to 22, **characterized in that** the pressure sensitive adhesive layer comprises natural rubber.

24. Film adhesive tape of at least one of Claims 16 to 23, **characterized in that** the pressure sensitive adhesive layer comprises at least one styreneisoprene block copolymer.

25. Film adhesive tape of at least one of Claims 16 to 24, **characterized in that** the pressure sensitive adhesive layer comprises at least one resin.

26. Film adhesive tape of at least one of Claims 16 to 25, **characterized in that** the bond strength on steel is at least 1.3 N/cm, preferably at least 1.6 N/cm.

27. Film adhesive tape of at least one of Claims 16 to 26, **characterized by** a thickness of at least 35 mm, preferably a thickness between 35 mm and 65 mm.

## Revendications

1. Procédé de production d'une bande adhésive pelliculaire, **caractérisé en ce qu'**un composite constitué d'au moins un couche de support pelliculaire extrudée et d'une couche autoadhésive sur l'un des côtés de la couche de support pelliculaire est soumis à un étirage biaxial.

2. Procédé selon la revendication 1, **caractérisé en ce qu'**une couche d'apprêt se trouve entre la couche de support pelliculaire et la couche autoadhésive.

3. Procédé selon au moins l'une quelconque des revendications qui précèdent, **caractérisé en ce qu'**une couche antiadhésive se trouve sur le côté de la couche de support pelliculaire opposé à la couche autoadhésive.

4. Procédé selon au moins l'une quelconque des revendications qui précèdent, **caractérisé en ce que** la couche de support pelliculaire de la bande adhésive est thermofixée.

5. Procédé selon au moins l'une quelconque des revendications qui précèdent, **caractérisé en ce que** le composite est thermofixé après l'étirage.

6. Procédé selon au moins l'une quelconque des revendications qui précèdent, **caractérisé en ce que** l'autoadhésif est appliqué sur la couche de support pelliculaire par enduction en masse fondue.

7. Procédé selon au moins l'une quelconque des revendications qui précèdent, **caractérisé en ce que** l'autoadhésif est appliqué sur la couche de support pelliculaire par coextrusion.

8. Procédé selon au moins l'une quelconque des revendications 1 à 6, **caractérisé en ce que** l'autoadhésif est, avant l'étirage, appliqué par placage sur la couche de support pelliculaire ou sur la couche d'apprêt.

9. Procédé selon au moins l'une quelconque des revendications qui précèdent, **caractérisé par** un mode opératoire sans solvant, en ce que toutes les couches du composite sont préparées à partir de la masse fondue.

10. Procédé selon au moins l'une quelconque des revendications qui précèdent, **caractérisé en ce que** l'autoadhésif est réticulé par un rayonnement à haute énergie ou par voie chimique.

11. Procédé selon au moins l'une quelconque des revendications qui précèdent, **caractérisé en ce que** l'étirage simultané est entrepris sur une installation utilisant une technologie à moteur linéaire.

12. Procédé selon au moins l'une quelconque des revendications qui précèdent, **caractérisé en ce que** le composite est, après l'étirage, envoyé à un procédé en ligne à un enrouleur sur tube ou à une machine de coupe.

13. Procédé selon au moins l'une quelconque des revendications qui précèdent, **caractérisé en ce que** le rapport total d'étirage est d'au moins 1 : 40.

14. Procédé selon au moins l'une quelconque des revendications qui précèdent, **caractérisé en ce que** le rapport des rapports d'étirage en direction longitudinale et en direction transversale est de plus de 0,9.

15. Procédé selon au moins l'une quelconque des revendications qui précèdent, **caractérisé en ce** la bande adhésive est enroulée sur des noyaux de carton avec couche de mousse élastique.

16. Bande adhésive pelliculaire à étirage biaxial, que l'on peut obtenir selon au moins l'une quelconque des revendications qui précèdent, constituée d'un composite formé par au moins une couche de support pelliculaire extrudée et une couche autoadhésive sur l'un des côtés de la couche de support pelliculaire, avec une tension d'au moins 50 N/mm² à 10% d'allongement en direction longitudinale.

17. Bande adhésive pelliculaire selon la revendication 16, **caractérisée en ce que** la couche de support pelliculaire contient au moins un agent de nucléation.

18. Bande adhésive pelliculaire selon la revendication 16 ou 17, **caractérisée en ce que** la couche de support pelliculaire est principalement constituée de polypropylène isotactique.

19. Bande adhésive pelliculaire selon au moins l'une quelconque des revendications 16 à 18, **caractérisée en ce que** la couche de support pelliculaire contient du polypropylène d'un indice de fusion d'au moins 1 à 10 g/10 min.

20. Bande adhésive pelliculaire selon au moins l'une quelconque des revendications 16 à 19, **caractérisée en ce que** le composite est étiré de manière à ce que la tension à 10% d'allongement en direction longitudinale soit d'au moins 70 N/mm², très préférentiellement d'au moins 100 N/mm².

21. Bande adhésive pelliculaire selon au moins l'une quelconque des revendications 16 à 20, **caractérisée en ce que** le composite est étiré de manière à ce que la résistance à la traction en direction longitudinale soit d'au moins 160 N/mm², de préférence d'au moins 190 N/mm², très préférentiellement d'au moins 220 N/mm².

22. Bande adhésive pelliculaire selon la revendication 16 ou 17, **caractérisée en ce que** la couche de support pelliculaire est principalement constituée de polyéthylène téréphtalate.

23. Bande adhésive pelliculaire selon au moins l'une quelconque des revendications 16 à 22, **caractérisée en ce que** la couche autoadhésive contient du caoutchouc naturel.

24. Bande adhésive pelliculaire selon au moins l'une quelconque des revendications 16 à 23, **caractérisée en ce que** la couche autoadhésive contient au moins un copolymère bloc de styrène - isoprène.

25. Bande adhésive pelliculaire selon au moins l'une quelconque des revendications 16 à 24, **caractérisée en ce que** la couche adhésive contient au moins une résine.

26. Bande adhésive pelliculaire selon au moins l'une quelconque des revendications 16 à 25, **caractérisée en ce que** la force d'adhérence sur l'acier est d'au moins 1,3 N/cm, de préférence d'au moins 1,6 N/cm.

27. Bande adhésive pelliculaire selon au moins l'une quelconque des revendications 16 à 26, **caractérisée par** une épaisseur d'au moins 35 mm, de préférence une épaisseur entre 35 mm et 65 mm.
